# EUROPEAN PATENT APPLICATION

(11) **EP 2 903 005 A1**
(43) Date of publication of application: **05.08.2015**
(21) Application number: 15150204.4
(22) Date of filing: 06.01.2015
(51) Int. Cl.: G11B 27/031, G11B 27/10, G11B 27/36, G05B 23/02, G05B 19/418

(54) **Video event recording system**

(30) Priority: 30.01.2014 US 201414168312
(71) Applicant: Imperx, Inc., Boca Raton, FL 33487 (US)
(72) Inventor: Dinev, Petko, Dimitrov, Boca Raton, FL Florida 33487 (US); Egri, John, Frank, Boca Raton, FL Florida 33487 (US)
(74) Representative: Harrison IP Limited

(57) **Abstract**

An Ethernet/IP process or network based video event recording system is provided, which is to be embedded into any production line (conveyor belt), providing a continuous high speed loop recording with a specially designed video recording and viewing software, synchronized with the factory precision time protocol server (IEEE 1588 server), and able to store and retrieve files on or from a remote server. A web based management interface is provided for remote control, as well as to retrieve and view the recorded images and videos. The video recording system is designed to be connected to the factory network and to work seamlessly with the standard factory timing protocols and standards, as well as the standard factory programmable logic controllers.

## Description

### Field of the invention

The present description generally relates to a video event recording system for use in a production line.

### Background of the invention

Many modern manufacturing processes use machine vision systems. These systems ensure fast, accurate and repeatable measurements, and thus guaranteeing a consistent product quality. The main objective of most machine vision systems is to monitor the products or articles being manufactured, rather than to monitor the actual manufacturing process or the proper operation of production equipment. In many occasions the manufacturing process has been interrupted by an unknown malfunction, the conveyor belt stops and the entire operation halts until the reason for interruption has been cleared. Because the actual conveyer belt motion has not being monitored, finding and clearing the reason for interruption takes a long time.

Many systems for monitoring a continuous manufacturing process such as polymeric films, paper webs, metallic webs, roll printing processes and the like, have been described, some of them are: US Pat 6,463,170; 6,211,905; 5,821,990; and 5717,456. These systems incorporate continuous recording and monitoring of the product itself being manufactured, but do not monitor or record the activities of the production line. These systems, because they use a continuous recording, require large amounts of storage space to hold the recordings.

Internet based production management system described in US Pat 6,804,629 suffers from the same flaws as the ones described above - it does not monitor the production line itself, requires a big storage space, and is not synchronized with the factory precision time protocol.

US Patent application 20060177119 A1 describes a digital diagnostic video system for manufacturing and industrial process, where sensors are associated with the machinery at monitoring zones for detecting errors and generating sensor signals representing the errors. Video cameras are located at monitoring zones associated with specific sensors to record the video. The sensors are located in areas prone to problems. This system will monitor only the places where sensors are located, and if the place is not known to cause problems it will not be monitored, and it a problem occurs will not be detected. In addition, since the video recording is not time stamped, the recordings of multiple camera systems are not synchronized. Such synchronization is very important, because it provides a global timing information and synchronizes in time all components connected to the factory network. Without such synchronization every sensor and associated recordings will be based on its own time. If there are multiple simultaneous failures, a cause-effect relationship between different sensors might not easily be established. Furthermore, without a global (universal) timestamp, searching through the recordings will be time consuming.

Accordingly, it is a general aim of this disclosure to provide a network based or Ethernet/IP high speed video recording system and method, which can be embedded into any production line, providing a continuous loop recording, synchronized with the factory precision time protocol server (IEEE 1588 server), and able to store and retrieve files on or from a remote server. It is a further aim of the present disclosure to provide a mobile, stand-alone high speed video recording system.

In one example, a video event recording system comprises: a network interface controller for interfacing the video event recording system to an industrial protocol network for controlling production equipment for manufacturing articles; a camera for generating a video image stream of the production equipment while manufacturing the articles, the video image stream including a multiplicity of frames; a local time clock for keeping a local time based upon a synchronization signal received from the industrial protocol network through the network interface controller and for generating a unique timestamp for each of the multiplicity of frames based upon the local time; and a circular buffer coupled to the image capturing apparatus through a first connection exclusive of the industrial protocol network, the circular buffer for storing the multiplicity of frames, the circular buffer further coupled to the local time clock for storing the unique timestamp for each of the multiplicity of frames. The network interface controller further for receiving a trigger signal from the industrial protocol network, the trigger signal including a trigger time window based upon a detected malfunction of the production equipment occurring at a malfunction time, selecting a plurality of frames of the multiplicity of frames based upon the trigger time window and the unique timestamp associated with each of the multiplicity of frames, and communicating the plurality of frames through the industrial protocol network.

In another example, a method for controlling a video event recording system coupled to programmable logic controller for controlling production equipment for manufacturing articles an industrial protocol network, the method comprises: synchronizing a local time clock within the video event recording system with a malfunction time clock within a programmable logic controller coupled to the video event recording system through an industrial protocol network; storing in a circular buffer within the video event recording system a multiplicity of frames of a video image stream of the production equipment generated by a camera coupled to the circular buffer through a first connection separate from the industrial protocol network, and further storing a unique timestamp for each of the multiplicity of frames based upon the local time clock; generating a trigger signal having a trigger time window based upon a detected malfunction of the production equipment occurring at a malfunction time; communicating the trigger signal from the programmable logic controller to the video event recording system through the industrial protocol network; selecting a plurality of frames of the multiplicity of frames based upon the trigger time window and the unique timestamp associated with each of the multiplicity of frames; and communicating the plurality of frames from the video event recording system to a file server through the industrial protocol network for storing and rendering on a display.

In another example, a production system comprises: production equipment for manufacturing articles, the production equipment capable of malfunctioning; a programmable logic controller coupled to the production equipment through an industrial protocol network for controlling the production equipment. The programmable logic controller comprises: a malfunction detector for detecting a malfunction in the production equipment, a malfunction clock for determining a time of the malfunction, and a trigger signal generator for generating a trigger signal based upon the detecting of the malfunction and the time of the malfunction. The production system further comprising a video event recording system coupled to the programmable logic controller through the industrial protocol network for recording video of the production equipment during the malfunction, the video event recording system including: a multiplicity of cameras for generating a multiplicity of video image streams of the production equipment, a multiplicity of circular buffers coupled to the corresponding multiplicity of cameras through a corresponding number of connections independent of the industrial protocol network, each circular buffer storing a multiplicity of frames of a corresponding video image stream, a local time clock for providing a unique timestamp for each of the multiplicity of frames stored in the multiplicity of circular buffers, and a selector for receiving the trigger signal through the industrial protocol network and selecting a plurality of frames from each of the multiplicity of circular buffers based upon the trigger signal. The production system further comprising: a timing synchronizer for synchronizing the malfunction clock and the local time clock; and a server for receiving the plurality of frames through the industrial protocol network and rendering the plurality of frames on a display.

### Brief description of the drawings

The invention will now be described further, by way of example, with reference to the accompanying drawings, in which:
FIG. 1 shows an example block diagram a single camera network based video event recording system;
FIG. 2 shows an example of a multiple camera network based video event recording system;
FIG. 3 shows an example of several trigger time windows generated in response to a detected malfunction; and
FIG. 4 shows a flow diagram of a process for controlling a video event recording system.

### Detailed description of the drawings

As required, detailed examples are disclosed herein; however, it is to be understood that the disclosed are merely examples and that the systems and methods described below can be embodied in various forms. Therefore, specific structural and functional details disclosed herein are not to be interpreted as limiting, but merely as a basis for the claims and as a representative basis for teaching one skilled in the art to variously employ the present subject matter in virtually any appropriately detailed structure and function. Further, the terms and phrases used herein are not intended to be limiting, but rather, to provide an understandable description of the concepts.

The description of the present disclosure is presented for purposes of illustration and description, but is not intended to be exhaustive or limited in the form disclosed. Many modifications and variations will be apparent without departing from the scope of the description. The examples are chosen and described in order to best explain the principles of the description and the practical application, and to enable others to understand the description for various examples with various modifications as are suited to the particular use contemplated.

According to one example, a production line operation is monitored by a set of digital cameras. Separately, the production line motion is controlled and monitored by a motion controller which is connected to an industrial programmable logic controller (PLC). The cameras are located in such way, so they can "see" the operation of the production line. The number of cameras, their resolution and speed or frame rate is determined based on the production line parameters of operation. Each camera sends a continuous sequence of frames representing the local line activities, to one single board computer. The computer is connected to factory local area network (LAN) using standard or custom network cable. The PLC is also connected to the factory LAN. An event recording SW is installed onto the computer. An IEEE 1588 timing server, also connected to the factory LAN provides a global timing information and synchronizes in time all components connected to the factory network including the single board computer. The SW receives global time information from the IEEE 1588 server, updates its local time and uses it as a time stamp for each incoming frame from each camera. Then each stream of images from each camera is stored locally into the computer memory using a circular buffer model - at any point of time only the last N images are kept. The operator can set the number of images N to be stored using the event recording SW. In the event of a malfunction of the production line, the line motion control unit sends an error signal to the PLC, and subsequently the PLC sends a trigger signal containing the time of stoppage information to the single board computer via the factory LAN. Upon receiving the trigger signal, the computer instructs the event recording SW that an malfunction or interruption has occurred and instructs the SW to generate individual video files based on the start time and stop parameters in the PLC trigger command. The video file may be formatted into an AVI, MPEG or other video file standard while remaining within the scope of this description. Each video file contains the start and stop time along with the recording duration. In one example, the SW generates a single movie (AVI or MPEG4) where the first frame in the movie is defined by the start time contained in the trigger signal or trigger packet and a number of frames is defined by the duration in the trigger packet or trigger signal. The video files are transferred to the file server also connected to the factory LAN. The operator monitoring the production line operation from his control computer can access the stored files from the file server, and view them using a standard viewing software application. Since the operator's computer is also connected to the factory LAN, the operator can review the stored video files, to locate the sequences, and see what the cause for the line malfunction was. Because the different cameras contain different time sequence information, the operator can monitor what was the line condition before, during and after the interruption.

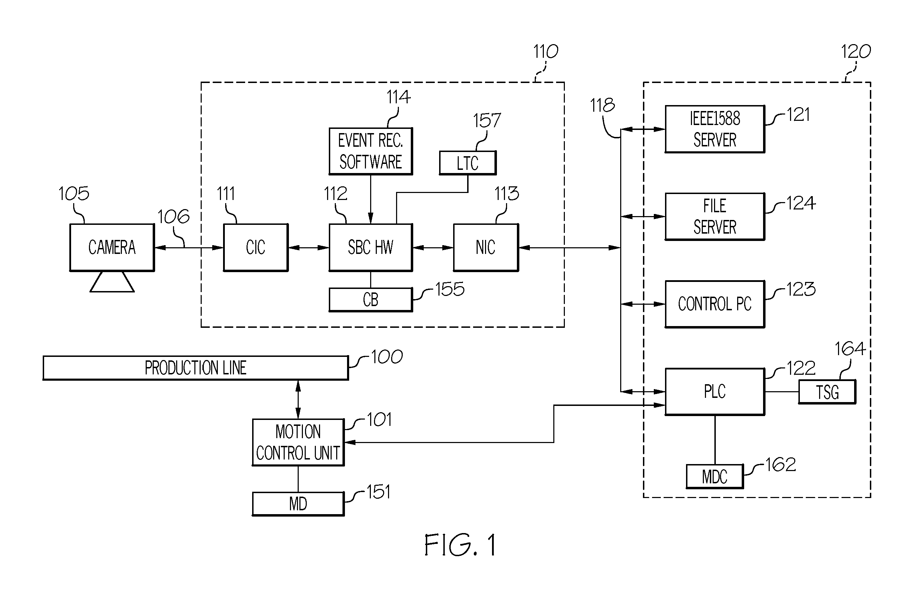

FIG. 1 shows an example block diagram a single camera network based video event recording system. The network based video event recording system is designed to perform a continuous loop recording of a production line activities, and in the event of a malfunction, interruption, stopping or upon request to retrieve and display a sequence of images. With reference to FIG. 1, a production line 100 is connected to a motion control unit 101. Articles being manufactured and production equipment of production line 100 are in the optical viewing area of a video camera 105. Control unit 101 includes a malfunction detector 151 which detects a malfunction in the production line. Malfunction detectors are known to those familiar with the art and are distinguished from detectors which detect defects in articles being manufactured. For example, a malfunction detector detects a conveyer belt stoppage in the production equipment moving articles being manufactured from one station to another station, while an article defect detector detects a fault in a product, such as an improperly coloured or shaped article being manufactured.

The camera 105 is mounted in such way, so it can monitor the entire or a selected sections of the production line motion. A camera-computer interface cable 106 connects the camera 105 to a video recording apparatus 110, which first processing module comprises of a camera interface card 111. The interface card 111 is connected to a single board computer 112 (SBC). The SBC includes a circular buffer 155 (CB) for storing images captured by camera 105 and a local time clock 157 (LTC) for providing a unique timestamp for each image in the CB. Event recording software (SW) 114 may be considered a computer program product comprising a storage medium readable by a processing circuit and storing instructions for execution by the processing circuit of an application server for performing the methods and process of this description. The SW 114 may be stored in memory when installed into the computer 112. A network interface card 113 is connected the computer 112 and an industrial protocol network 118. Industrial protocol network 118 may be any form of wired or wireless local area network known to those familiar with the art and capable of interfacing elements of a production system and includes an Ethernet/IP Process, DeviceNet, CompoNet, ControlNet and Common Industrial Protocol (CIP) and other networks for supporting process automation. The interface card is connected through the local area network to production equipment 120, which comprises of an IEEE 1588 timing server 121 or equivalent, a programmable logic controller 122 which may be provided by Rockwell, a control computer 123, and a file server 124, all connected to the network 118. The programmable logic controller 122 is connected to the production line control unit 101 and includes a malfunction detection clock 162 (MDC) for determining a time of a malfunction detected by malfunction detector 151 and a trigger signal generator 164 for generating trigger signals based upon the malfunction detector 151 and the malfunction detector clock 162.

Control unit 101 monitors the production line 100 motion and provides information to logic controller 122. Light and images received from the production line 100 are captured by camera 105 and converted to a digital signal representing a continuous stream of image frames, which are transmitted to the apparatus 110 (which includes CIC 111, SBC 112, CB 155, and SW 114) using cable 106. The timing server 121 provides a timing information and time synchronizes the LTC 157 of apparatus 110, and all components connected to network 118 including MDC 162.

The SW 114 combined with LTC 157 takes the timing information provided by server 121, generates a time stamp, and appends the time stamp to every incoming frame from camera 105 and stored in CB 155, where the time stamp of every image frame is different or unique. A sequence of predetermined number (N) of the appended image frames is stored into the computer 112 memory frame by frame in circular buffer 155, thus providing a loop recording of the images in is such ways, that loop contains the last N images all the time. In the event of a malfunction of the production line 100, the control unit 101 sends an error signal to the logic controller 122, and at least one trigger signal is generated by trigger signal generator 164 (TSG) and the trigger signal is send by the controller 122 to the apparatus 110 via the network 118. Upon receiving the trigger signal the computer instructs the SW 114 to generate video file comprising of the last N images, where the video file is generated in such way, so it contains the frame captured in the time moment when the line has malfunctioned (the event), or other time that may help with determining the malfunction of the production. When generating the video file the SW can be instructed with a trigger time window signal indicative of how many frames pre (start time) and how many frames post (stop time) event to record, based on the start time and stop parameters in the PLC trigger command. The video file contains the start and stop time along with the recording duration. Upon completion the video file is transferred to the file server 124, and a message is sent to control computer 123 the files are available for viewing. From computer 123 the video file can be rendered on the display for review and the cause for the malfunction event to be determined. In other examples, the control PC 123 and the file server 124 may be a single unit or the function may be distributed through various components of the system.

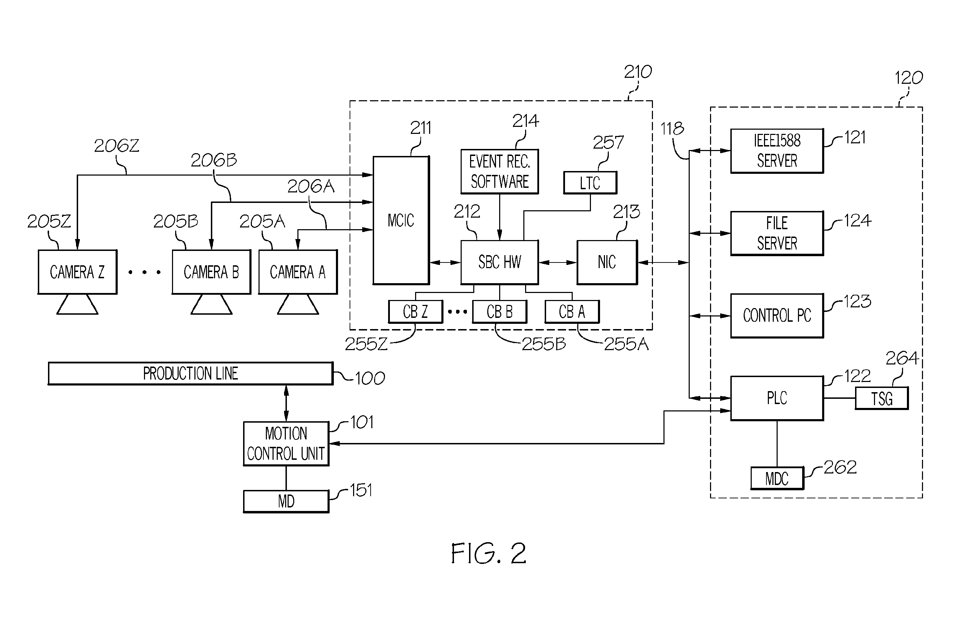

FIG. 2 shows an example of a multiple camera network based video event recording system. The example of FIG. 2 is modified from and similar in structure to the example shown in FIG 1. In FIG 2, similar functioning parts, which correspond to those in FIG 1, are marked with the reference numbers having identical least two significant digits. In this modified example, a production line 100 is connected to a motion control unit 101 and line 100 is in the optical viewing area of plurality of video cameras 205A, 205B,...205Z. The cameras 205A, 205B,.. 205Z are mounted in such way, so they can monitor the production line. A plurality of camera-computer interface cables 206A, 206B, ... 206Z connect each camera 205A, 205B, ... 205Z to a multiport video recording apparatus 210, which first processing module comprises of a multiport camera interface card 211. The interface card 211 is connected to a single board computer 212. An event recording software 214 (SW) is installed into the computer 212. A network interface card 213 is connected the computer 212. The interface card is connected to factory local area network such as industrial protocol network 118. Production equipment 120 comprises of an IEEE 1588 timing server 121, a programmable logic controller 122 which may be using Ethernet Industrial Protocol, a control computer 123, and a file server 124, all connected to the network 118. The logic controller is connected to the production line control unit 101.

The example to FIG 2 operates similarly to the example described in FIG. 1. Control unit 101 monitors the line 100 motion and provides information to logic controller 122. Light received from the various sections of the production line 100 are captured form the cameras 205A, 205B, ... 205Z and converted to a digital signal representing a plurality continuous streams of image frames, which are transmitted to the apparatus 210 using corresponding cables 206A, 206B, ... 206Z. The timing server 121 provides a timing information and time synchronizes the local time clock 257 of apparatus 210, and all components connected to network 118 including malfunction determining clock 262. The SW 214 and local time clock 257 takes the timing information provided by server 121, generates a time stamp, and appends the time stamp in every incoming frame from every camera 205A, 205B, ... 205Z, where the time stamp of every image frame coming from an individual camera is different, where also the time stamp for frames taken at the same moment from different cameras is identical. For each camera 205A, 205B, ... 205Z a sequence of predetermined number NA, NB,...NZ of the appended image frames is stored into the computer 112 memory frame by frame in a plurality of circular buffers 255A, 255B, 255Z where each camera has its own buffer, thus providing a plurality of loop recording of the images in is such ways, that each loop contains the last NA, NB, ... NZ images correspondingly all the time. In the event of a malfunction of the production line 100, the control unit 101 sends an error signal to the logic controller 122, and a trigger signal is send by the controller 122 to the apparatus 210 via the network 118. Upon receiving the trigger signal the computer instructs the SW 214 to generate video file comprising of the last NA, NB, ... NZ images correspondingly, where the individual video files are generated in such way, so some or all files may contain the frames captured in the time moment when the line has malfunctioned (the event), and some or none of the files might not contain the frames captured in the time moment when the line has malfunctioned (the event). When generating the corresponding video file the SW can be instructed how many frames pre (start time) and how many frames post (stop time) event to record from each camera, based on the start time and stop parameters in the PLC trigger command. Each video file contains the start and stop time along with the recording duration, or a trigger time window. Upon completion the video files are transferred to the file server 124, and are available for viewing from control computer 123. From computer 123 the video files can be reviewed and the cause for the malfunction event to be determined. Note, in other examples, the trigger signal may be generated in response to a manual input from the operator or other automated input.

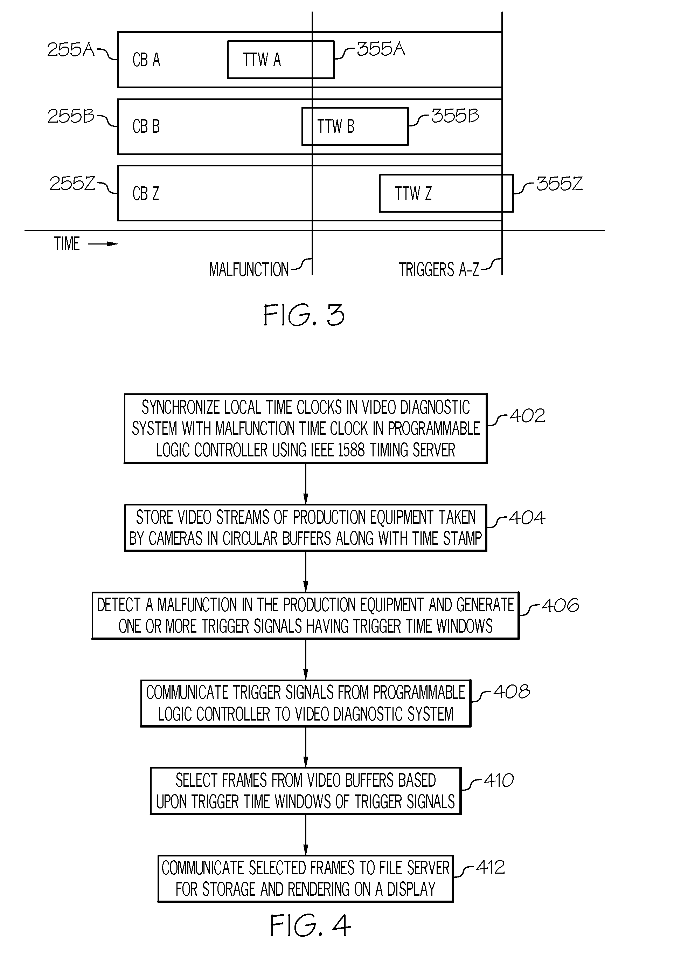

FIG. 3 shows an example of several trigger time windows generated in response to a detected malfunction. Three circular buffers CB A 255A, CB B 255B, and CB Z, 255Z are shown and are storing a stream of images, each circular buffer storing a multiplicity of images from corresponding cameras 205 A, 205 B, and 205 Z each of the multiplicity of images having a timestamp corresponding to its occurrence in time as indicated by the lower horizontal axis. On other example systems numerous additional cameras and corresponding circular buffers may be added while remaining within the scope of this description. A malfunction is detected at time indicated by "malfunction" and thereafter, trigger signal generator 264 generates trigger signal A, trigger signal B, and trigger signal C at a time indicated by "triggers a-z". The trigger signals may have the same time windows or may have different time windows. In a sequential production line, staggering the trigger time windows may help facilitate analysis of the malfunction of the production equipment. In this example, trigger time window A 355A causes a selection of a plurality of frames or the multiplicity of frames of the circular buffer significantly before the malfunction and some after the malfunction, trigger time window B 355B causes a selection of frames some before and significantly more after the time of the malfunction, while trigger time window Z causes a selection of frames after the malfunction and even into the future, after the communication of the trigger signals. Synchronization of the local time clock with the malfunction detection clock allows for accurately defining the trigger time windows and thus the frames selected from the circular buffers for analysis. Otherwise variable clock drift, variable network signal processing and variable communication latencies may require selection and the analysis of significantly more frames in the determining the cause of the malfunction. If the malfunction shuts down the production line, the delays in resolving the malfunction directly impact the productivity of the production line. Furthermore, problems resulting from these variables are compounded as video cameras provide increasingly higher frame rates and as circular buffers provide increasing larger frame storage capabilities. Therefore, quickly and accurately locating frames relative to the malfunction in the circular buffer may be advantageous in improving the efficiency of the production line. It should further be appreciated that the frame rates of each camera may be different while remaining within the scope of the description, the trigger time window accounting for more frames within a determined window duration with a higher frame rate camera. Operating a camera at a higher frame rate may provide an advantage at evaluating extremely fast operating mechanisms of production equipment that may be a cause of a malfunction, while production equipment operating at a slower rate may be able to utilize a camera operating at a slower rate and maintain an ability to diagnose a corresponding malfunction.

It should further be appreciated that modifications of the examples of the block diagrams of FIG. 1 and FIG. 2 are possible while remaining within the scope of this description. For example, the block diagram of FIG. 2 can be modified by adding the camera 105 and apparatus 110 of FIG. 1 coupled to local area network 118. In this example, the local time clock 157, local time clock 257 and malfunction detection clock 262 are synchronized by the IEEE 1588 timing server 121. This allows for the continued accurate selection of frames from the circular buffers even though camera 105 has a different local time clock and different circular buffer apparatus than cameras 205A - 205Z based upon the clock synchronization and the trigger signals.

Also note that FIG. 1 shows an example of a system having one camera, one local time clock and one circular buffer. FIG. 2 shows and example of a system having a plurality of cameras coupled to a corresponding of plurality of circular buffers and one local time clock. The aforementioned combination of FIG. 1 and FIG. 2 show a system with a plurality of cameras, a corresponding plurality of circular buffers and a plurality of local time clocks. In all examples the local time clock or local time clocks are synchronized with the malfunction determiner clock using a time server to enable accurate frame selection from the circular buffers. A large production line may have many cameras, many circular buffers and many local time clocks distributed over large distances of the production line. In this case the synchronized clocks allow for accurate selection of frames from the circular buffers even though the components of the network based video event recording system are widely distributed across the network and across physical distances.

FIG. 4 shows a flow diagram of a process for controlling a video event recording system. Step 402 shows synchronizing a local time clock within the video event recording system with a malfunction time clock within a programmable logic controller coupled to the video event recording system through an industrial protocol network. The synchronization in this example is with an IEEE 1588 timing server, in other systems an equivalent timing server that is able to synchronize the clocks may be used while remaining within the scope of this description. Step 404 shows storing in a circular buffer within the video event recording system a multiplicity of frames of a video image stream of the production equipment generated by a camera coupled to the circular buffer through a first connection separate from the industrial protocol network, and further storing a unique timestamp for each of the multiplicity of frames based upon the local time clock. Step 406 shows generating a trigger signal having a trigger time window based upon a detected malfunction of the production equipment occurring at a malfunction time. Step 408 shows communicating the trigger signal from the programmable logic controller to the video event recording system through the industrial protocol network. Step 410 shows selecting a plurality of frames of the multiplicity of frames based upon the trigger time window and the unique timestamp associated with each of the multiplicity of frames. Step 412 shows communicating the plurality of frames from the video event recording system 110 to a file server 124 through the industrial protocol network 118 for storing and rendering on a display.

Similar to the previously discussed systems, the process of FIG. 4 can be modified to support multiple cameras, multiple circular buffers and a single or multiple local time clocks. It should be further appreciated what while FIG. 3 shows trigger time windows that are different, one or more trigger time windows may be identical while remaining within the scope of this description.

The description also shows a video event recording system comprising a network interface controller 213 for interfacing the video event recording system to an industrial protocol network 118 for controlling production equipment of a production line 100 for manufacturing articles. A camera 205A generates a video image stream of the production equipment while manufacturing the articles, the video image stream including a multiplicity of frames. A local time clock 257 keeps a local time based upon a synchronization signal received from the industrial protocol network through the network interface controller. The local time clock generates a unique timestamp for each of the multiplicity of frames based upon the local time. A circular buffer 255A is coupled to the camera through a first connection 206A exclusive of the industrial protocol network 118, the circular buffer for storing the multiplicity of frames, the circular buffer further coupled to the local time clock for storing the unique timestamp for each of the multiplicity of frames. The network interface controller 213 further for receiving a trigger signal from the industrial protocol network, the trigger signal including a trigger time window 355A based upon a detected malfunction of the production equipment occurring at a malfunction time. The network interface controller further including single board computer 212 and software 214 for selecting a plurality of frames 355A of the multiplicity of frames 255A based upon the trigger time window and the unique timestamp associated with each of the multiplicity of frames, and then communicating the plurality of frames through the industrial protocol network 118.

Similar to the previously discussed systems, the above system can be modified to support multiple cameras, multiple circular buffers and a single or multiple local time clocks. For example the above system can further include a second network interface controller 113 for interfacing the video event recording system to the industrial protocol network for controlling production equipment, and a second camera 105 for generating a second video stream of the production equipment while manufacturing the articles. The second video stream may include a second multiplicity of frames having images different from the multiplicity of frames. Further included is a second local time clock 157 for keeping a second local time based upon a second synchronization signal received from the industrial protocol network through the network interface controller and for generating a unique timestamp for each of the second multiplicity of frames based upon the second local time. In this example the timing server 121 sends a synchronization signal to each local time clock 157 and 257. In other examples the timing server may send a common synchronization signal to all local time clocks. Also included is a second circular buffer 155 coupled to the second camera 105 through a second connection 106 exclusive of the industrial protocol network 118 and the first connection 206A, the second circular buffer stores the second multiplicity of frames, the second circular buffer is further coupled to the second local time clock 157 for storing the unique timestamp associated with each of the second multiplicity of frames. The second network interface controller further for receiving a second trigger signal from the industrial protocol network 118, the second trigger signal including a second trigger time window based upon the malfunction time, selecting a second plurality of frames of the second multiplicity of frames based upon the second trigger time window and the unique timestamp associated with each of the second multiplicity of frames, and communicating the second plurality of frames through the industrial protocol network.

In these examples, the video event recording system further comprising a file server 124 coupled to the industrial protocol network 118 for receiving and storing the plurality of frames and the second plurality of frames and may include controller PC 123 for rendering the plurality of frames and the second plurality of frames on a display.

The cameras 105, 205A, 205B, 205Z may utilizes a CCD imaging sensor, a CMOS imaging sensor or other technology sensor to generate the video image stream while remaining within the scope of this description.

Having independent connections 106, 206A, 206B, 206Z between the cameras and the circular buffers allows for communications of data at the very high data rate of the image stream produced by the cameras. Furthermore, separating the data of connections 106, 206A, 206B, 206Z from the local area network 118 maintains available bandwidth for the communication between devices of the network. By way of this example, only the frames of video selected by the accurately defined trigger time windows need be communicated on network 118, thereby conserving data bandwidth for other data communications through the industrial protocol network 118. Connections 106, 206A, 206B, 206Z may include one of a Gigabit Ethernet (GigE) connection, Gigabit Vision Ethernet (GVE) connection, a CameraLink connection, a CoaXPress connection, a Universal Serial Bus (USB) connection, a USB Vision connection, a FireWire (IEEE 1394) connection, and a connection able to provide operating power to the camera or other connection able to communicate data comprising streaming images from the corresponding cameras.

The description also shows a production system comprising production equipment included within a production line 100 for manufacturing articles, the production equipment capable of malfunctioning; a programmable logic controller 122 coupled to the production equipment through an industrial protocol network 118 for controlling the production equipment. The programmable logic controller comprises a motion control unit 101 having a malfunction detector 151 for detecting a malfunction in the production equipment, a malfunction clock 262 for determining a time of the malfunction, and a trigger signal generator 264 for generating a trigger signal based upon the detecting of the malfunction and the time of the malfunction. The production system also includes a video event recording system 205, 206, 210 coupled to the programmable logic controller through the industrial protocol network 118 for recording video of the production equipment during the malfunction, the video event recording system including a multiplicity of cameras 205A, 205B, 205Z for generating a multiplicity of video image streams of the production equipment, a multiplicity of circular buffers 255A, 255B, 255Z coupled to the corresponding multiplicity of cameras through a corresponding number of connections 206A, 206B, 206Z independent of the industrial protocol network 118, each circular buffer storing a multiplicity of frames of a corresponding video image stream. The video event recording system further including a local time clock 257 for providing a unique timestamp for each of the multiplicity of frames stored in the multiplicity of circular buffers, and a selector 212, 213, 214 for receiving the trigger signal through the industrial protocol network and selecting a plurality of frames from each of the multiplicity of circular buffers based upon the trigger signal. The production system further includes a timing synchronizer 121 for synchronizing the malfunction clock 262 and the local time clock 257, and a server 124, 123 for receiving the plurality of frames through the industrial protocol network and rendering the plurality of frames on a display. The local time clock comprises a multiplicity of local time clocks 157, 257 corresponding to the multiplicity of circular buffers 155, 255, the multiplicity of local time clocks synchronized by the timing synchronizer 121, and further wherein the timing synchronizer is an IEEE 1588 timing server or equivalent. The trigger signal may include a multiplicity of trigger signals corresponding to the multiplicity of circular buffers, each of the multiplicity of trigger signals having a unique trigger time window 355A, 355B, 355Z.

Accordingly, it should be appreciated that the description provides a novel Ethernet/IP high speed video recording apparatus, which can be embedded into any production line, providing a continuous loop recording synchronized with the factory precision time protocol server (IEEE 1588 server), and able to store and retrieve files on/from a remote server.

Many modifications and variations may occur to the description herein while remaining within the scope of this description. It is intended that the description be construed as including all such modifications and alterations. Potential modifications are as follows. Depending on the production line parameters a set of cameras can be used, located and distributed in such way, so the operation of the entire or part of the production line can be observed. When a plurality of cameras are used, all or some of the cameras can be connected to at least one individual camera interface card located in or out of the single board computer. All or some of the cameras might be connected to outside box, and the box to be connected to the computer. The camera can utilize a CCD or CMOS image sensor. The camera output can be any standard or non-standard interface. In case where the camera output interface is different from the camera interface card input interface, a converter box can be used. The PLC controller can be any standard or non-standard programmable logic controller using Ethernet Industrial Protocol or other protocol. The connections between the camera and the computer and the computer and the factory network can be wired or wireless. The single board computer can be any standard or custom computer, laptop, tablet, server, industrial computer, or any standard or custom hardware capable of running a real time operating system, has network capabilities, and can record loop video upon trigger request. The control computer can be any standard or custom computer, laptop, tablet, server, industrial computer, smart phone, or any standard or custom hardware capable of running a real time operating system, has network capabilities, can receive email at text messages, and can display video clips. The file server can be located inside the single board computer or inside the control computer. The single board computer and the control compute might share the same hardware - i.e. can be combined in one computer. The message sent to the control computer can be in a form of email, SMS, MMS, ICQ, IM or any means of sending messages. The message may or may not contain a video file.

Also, the description shows a high speed Ethernet video diagnostic system for identifying malfunctions and other errors in a production line operation, comprising of at least one image capturing apparatus or camera located at a predetermined location of the said production line, for generating a continuous stream of image frames representing said production line activities; said image capturing apparatus is connected to a computer for collecting said image frames, said compute is connected to a factory network; a file server, a monitoring station, a precision time protocol IEEE 1588 server, and a programmable logic controller are connected to said network; a specially written program installed onto said computer is to provide a continuous circular buffer loop recording of said frames is such way, so at any point of time only a predetermined number of frames are available in the loop, said number of frames are determined by the production line operator; said IEEE 1588 server provides a global timing information and synchronizes in time all components connected to the said factory network; said program appends time stamp information to every frame in the said circular buffer, said programmable logic controller monitors the said production line activities, and upon receiving an error signal from said production line, it generates a trigger signal which is transmitted to said factory network; said trigger signals contains time information when the malfunction occurs and how many frames pre and post malfunction is needed; said computer used said trigger signals and generates a video file using said trigger information; said computer sends the generated video file to said network, stores it in said file server and sends a warning signal to said monitoring station, that said video file is available.

The description of the present application has been presented for purposes of illustration and description, but is not intended to be exhaustive or limited to the description in the form disclosed. Many modifications and variations will be apparent without departing from the scope of the description. The examples were chosen and described in order to best explain the principles of the description and the practical application, and to enable the understanding of the description for various examples with various modifications as are suited to the particular use.

## Claims

1. A video event recording system comprising:
a network interface controller for interfacing the video event recording system to an industrial protocol network for controlling production equipment for manufacturing articles;
a camera for generating a video image stream of the production equipment while manufacturing the articles, the video image stream including a multiplicity of frames;
a local time clock for keeping a local time based upon a synchronization signal received from the industrial protocol network through the network interface controller and for generating a unique timestamp for each of the multiplicity of frames based upon the local time; and
a circular buffer coupled to the camera through a first connection exclusive of the industrial protocol network, the circular buffer for storing the multiplicity of frames, the circular buffer further coupled to the local time clock for storing the unique timestamp for each of the multiplicity of frames,
the network interface controller further for
receiving a trigger signal from the industrial protocol network, the trigger signal including a trigger time window based upon a detected malfunction of the production equipment occurring at a malfunction time,
selecting a plurality of frames of the multiplicity of frames based upon the trigger time window and the unique timestamp associated with each of the multiplicity of frames, and
communicating the plurality of frames through the industrial protocol network.

2. A video event recording system as claimed in claim 1, further comprising:
a second camera for generating a second video image stream of the production equipment while manufacturing the articles, the second video stream including a second multiplicity of frames having images different from the multiplicity of frames, wherein
the local time clock further generates a unique timestamp for each of the second multiplicity of frames based upon the local time; and
a second circular buffer coupled to the second camera through a second connection exclusive of the industrial protocol network and the first connection, the second circular buffer for storing the second multiplicity of frames, the second circular buffer further coupled to the local time clock for storing the unique timestamp associated with each of the second multiplicity of frames,
the network interface controller further for
selecting a second plurality of frames of the second multiplicity of frames based upon the trigger time window and the unique timestamp associated with each of the second multiplicity of frames, and
communicating the second plurality of frames through the industrial protocol network.

3. A video event recording system as claimed in claim 1, further comprising:
a second camera for generating a second video image stream of the production equipment while manufacturing the articles, the second video image stream including a second multiplicity of frames having images different from the multiplicity of frames, wherein
the time clock further generates a unique timestamp for each of the second multiplicity of frames based upon the local time; and
a second circular buffer coupled to the second camera through a second connection exclusive of the industrial protocol network and the first connection, the second circular buffer for storing the second multiplicity of frames, the second circular buffer further coupled to the local time clock for storing the unique timestamp associated with each of the second multiplicity of frames,
the network interface controller further for
receiving a second trigger signal from the industrial protocol network, the second trigger signal including a second trigger time window based upon the malfunction time,
selecting a second plurality of frames of the second multiplicity of frames based upon the second trigger time window and the unique timestamp associated with each of the second multiplicity of frames, and
communicating the second plurality of frames through the industrial protocol network.

4. A video event recording system as claimed in claim 3, wherein the time window is different from the second time window, the camera generates the video image stream at a first frame rate and the second camera generates the second video image stream at a second frame rate that is different from the first frame rate.

5. A video event recording system as claimed in claim 1 further comprising:
a second network interface controller for interfacing the video event recording system to the industrial protocol network for controlling production equipment;
a second camera for generating a second video stream of the production equipment while manufacturing the articles, the second video stream including a second multiplicity of frames having images different from the multiplicity of frames;
a second local time clock for keeping a second local time based upon a second synchronization signal received from the industrial protocol network through the network interface controller and for generating a unique timestamp for each of the second multiplicity of frames based upon the second local time; and
a second circular buffer coupled to the second camera through a second connection exclusive of the industrial protocol network and the first connection, the second circular buffer for storing the second multiplicity of frames, the second circular buffer further coupled to the second local time clock for storing the unique timestamp associated with each of the second multiplicity of frames,
the second network interface controller further for
receiving a second trigger signal from the industrial protocol network, the second trigger signal including a second trigger time window based upon the malfunction time,
selecting a second plurality of frames of the second multiplicity of frames based upon the second trigger time window and the unique timestamp associated with each of the second multiplicity of frames, and
communicating the second plurality of frames through the industrial protocol network.

6. A video event recording system as claimed in claim 5, wherein
the synchronization signal and the second synchronization signal are generated based upon an IEEE 1588 timing server or equivalent coupled to the network interface controller and the second network interface controller through the industrial protocol network and
the malfunction time is based upon the detected malfunction and a malfunction detection clock also synchronized with the IEEE 1588 timing server or equivalent.

7. A video event recording system as claimed in claim 5 or claim 6, further comprising a file server coupled to the industrial protocol network for receiving and storing the plurality of frames and the second plurality of frames and for rendering the plurality of frames and the second plurality of frames on a display.

8. A video event recording system as claimed in any preceding claim, wherein the first connection includes one of a Gigabit Ethernet (GigE) connection, Gigabit Vision Ethernet (GVE) connection, a CameraLink connection, a CoaXPress connection, a Universal Serial Bus (USB) connection, a USB Vision connection, a FireWire (IEEE 1394) connection, and a connection able to provide operating power to the camera.

9. A video event recording system as claimed in any preceding claim, wherein the camera utilizes one of a CCD imaging sensor, and a CMOS imaging sensor to generate the video image stream.

10. A video event recording system as claimed in any preceding claim, wherein the video event recording system is coupled through the industrial protocol network to a programmable logic controller for detecting malfunction in the production equipment and determining the malfunction time, and further wherein the programmable logic controller comprises a Rockwell PLC or equivalent.

11. A method of controlling a video event recording system coupled to a programmable logic controller for controlling production equipment for manufacturing articles an industrial protocol network, the method comprising:
synchronizing a local time clock within the video event recording system with a malfunction time clock within the programmable logic controller coupled to the video event recording system through the industrial protocol network;
storing in a circular buffer within the video event recording system a multiplicity of frames of a video image stream of the production equipment generated by a camera coupled to the circular buffer through a first connection separate from the industrial protocol network, and further storing a unique timestamp for each of the multiplicity of frames based upon the local time clock;
generating a trigger signal having a trigger time window based upon a detected malfunction of the production equipment occurring at a malfunction time;
communicating the trigger signal from the programmable logic controller to the video event recording system through the industrial protocol network;
selecting a plurality of frames of the multiplicity of frames based upon the trigger time window and the unique timestamp associated with each of the multiplicity of frames; and
communicating the plurality of frames from the video event recording system to a file server through the industrial protocol network for storing and rendering on a display.

12. A method as claimed in claim 11 further comprising:
storing in a second circular buffer within the video event recording system a second multiplicity of frames of a second video image stream generated by a second camera coupled to the second circular buffer through a second connection separate from the industrial protocol network and the first connection, and further storing a unique timestamp for each of the second multiplicity of frames based upon the local time clock;
selecting a second plurality of frames of the second multiplicity of frames based upon the trigger time window and the unique timestamp associated with each of the second multiplicity of frames; and
communicating the second plurality of frames from the video event recording system to the file server through the industrial protocol network for storing and rendering on the display.

13. A method as claimed in claim 11, further comprising:
storing in a second circular buffer within the video event recording system a second multiplicity of frames of a second video image stream generated by a second camera coupled to the second circular buffer through a second connection separate from the industrial protocol network and the first connection, and further storing a unique timestamp for each of the second multiplicity of frames based upon the local time clock;
generating a second trigger signal having a second trigger time window based upon the detected malfunction of the production equipment occurring at the malfunction time, the second trigger time window being different from the trigger time window;
communicating the second trigger signal from the programmable logic controller to the video event recording system through the industrial protocol network;
selecting a second plurality of frames of the multiplicity of frames based upon the second trigger time window and the unique timestamp associated with each of the second multiplicity of frames; and
communicating the second plurality of frames from the video event recording system to the file server through the industrial protocol network for storing and rendering on the display.

14. A method as claimed in claim 11, further comprising:
synchronizing a second local time clock within the video event recording system with the malfunction time clock within the programmable logic controller coupled to the video event recording system through the industrial protocol network;
storing in a second circular buffer within the video event recording system a second multiplicity of frames of a second video image stream generated by a second camera coupled to the second circular buffer through a second connection separate from the industrial protocol network and the first connection, and further storing a unique timestamp for each of the second multiplicity of frames based upon the second local time clock;
generating a second trigger signal having a second trigger time window based upon the detected malfunction of the production equipment occurring at the malfunction time;
communicating the second trigger signal from the programmable logic controller to the video event recording system through the industrial protocol network;
selecting a second plurality of frames of the second multiplicity of frames based upon the second trigger time window and the unique timestamp associated with each of the second multiplicity of frames; and
communicating the second plurality of frames from the video event recording system to the file server through the industrial protocol network for storing and rendering on the display.

15. A method as claimed in claim 14, wherein the synchronizing the malfunction time clock, the local time clock and the second local time clock is facilitated with an IEEE 1588 timing server or equivalent.
